# EUROPEAN PATENT SPECIFICATION

(11) **EP 4 426 669 B1**
(45) Date of publication and mention of the grant of the patent: **14.10.2026**
(21) Application number: 22799998.4
(22) Date of filing: 02.11.2022
(51) Int. Cl.: C05F 17/979, C05F 17/921, C05F 17/936

(54) **DYNAMIC ACTIVE LOADING AND AERATION FLOOR FOR COMPOSTING ORGANIC MATERIAL IN A CLOSED MOBILE OR STATIONARY REACTOR**
DYNAMISCHER AKTIVER LADE- UND BELÜFTUNGSBODEN ZUR KOMPOSTIERUNG VON ORGANISCHEM MATERIAL IN EINEM GESCHLOSSENEN MOBILEN ODER STATIONÄREN REAKTOR
PLANCHER DE CHARGEMENT ET D'AÉRATION DYNAMIQUE ACTIF POUR LE COMPOSTAGE DE MATIÈRE ORGANIQUE DANS UN RÉACTEUR FIXE OU MOBILE FERMÉ

(30) Priority: 02.11.2021 NL 2029597
(43) Date of publication of application: 11.09.2024
(73) Proprietor: Circuworld Holding B.V., 6811 AH Arnhem (NL)
(72) Inventor: DE JONG, Julius Laurens, 5211 AK 'S-HERTOGENBOSCH (NL); VAN DEN BOOMEN, Henricus Nicolaas Cornelis, 5211 AK 'S-HERTOGENBOSCH (NL); VAN DUIJNHOVEN, Dennis Hendricus Wilhelmus Gerardus, 5211 AK 'S-HERTOGENBOSCH (NL)
(74) Representative: Algemeen Octrooi- en Merkenbureau B.V.
(86) International application number: PCT/NL2022/050615
(87) International publication number: WO 2023/080779

(56) References cited:
- EP-A1- 3 095 771
- EP-B1- 0 334 460
- DE-A1- 10 246 715
- FR-A1- 2 820 421
- US-A- 4 798 802
- US-A- 5 409 831

## Description

The present invention relates to a device for composting organic material. The present invention further relates to a method for treating an organic residual or waste material with air using the device as mentioned above, as well as to the particular application of said device, which has advantages for quicker, more efficient and more uniform charging and discharging of the reactor without having a detrimental effect thereby on the intended uniform continuous aeration.

Composting is the process of recycling, stabilizing and upgrading of organic residual or waste material. It is by its nature a relatively slow process. The following are important, among other things, for the composting process: the composition of the organic base material, temperature, moisture and the presence of oxygen. Composting begins with the attacking and breaking down of vegetable material by fungi and bacteria. In this degradation process the fungi and bacteria use oxygen, and carbon dioxide, water and heat are released. Composting can be accelerated by optimizing the conditions in which the microbial activity takes place, for example through the application of an oxygen-rich, warm and moist environment.

Devices for composting organic material are known per se.

A floor assembled from separate shaped concrete slabs is known from German Offenlegungsschrift T 25 51 599; said floor serves as a substrate for the storage of organic wastes during composting. The shaped concrete slabs are provided with a continuous channel from which one or more channel-shaped recesses project to the surface of the floor to lead air to the organic wastes so that composting thereof can take place.

From Canadian publication CA2306658A1 it is known, in the biological treatment of organic material, to guarantee aerobic conditions throughout the treatment process, so that air must be led through the organic material to ensure a sufficient oxygen level and to remove excess heat. According to this Canadian publication, a channel is provided to aerate the organic material, and to collect and remove liquid from the organic material. The channel is to be understood as a pipeline with several openings for air distribution or removal, wherein the upper side of the channel is closed with a removable perforated cover. One or more channels combined into a series form an aeration system, wherein the channels of the aeration system are integrated in the floor of a composting reactor and are connected via pipelines to a manifold outside the reactor for air distribution or removal.

International application WO2006/120517 discloses a waste processing system based on a permeable material container, wherein a recirculation system of the air within the container is provided. The air circulation system comprises a number of air inlet pipes and a number of air inlets, both of which are fitted in the container.

Moreover, a device for introducing gases into biological fixed-bed filters with a distributor, the gas being forced from said filters and led through the filter material, is known from European patent application EP0397645.

A method is also known from European patent EP2828225 for composting mushroom compost, wherein the aforementioned mushroom compost is separated from casing soil prior to composting of the aforementioned mushroom compost, said method comprising composting of the aforementioned mushroom compost in conditions to supply composted mushroom compost with a dry matter content from 45% to 90%, wherein the aforementioned mushroom compost is composted at a temperature of 30-85°C, for a minimum period of 5 days.

Japanese publication JP 2002-346513 relates to a fermentation tank in which composting is carried out. Under the floor of said fermentation tank there is a pipe system, wherein a heat transfer medium, for example hot water, is fed to an inner pipe, after which air is led in the annular space between the outer pipe and the inner pipe. The injected air is thus warmed by the warm water flowing through the inner pipe, and this warmed air can then exit through the outer pipe via the openings made therein. This system of a closed inner pipe and an outer pipe provided with openings is thus placed in the substrate of the fermenter, said system being placed in a kind of housing. Because the housing is only made open at the top, the air coming out of the openings in the outer pipe will only be able to leave the open top of the housing, and the material to be fermented, which is on the floor, will come into contact with the air stream, to be dried and fermented.

German Offenlegungsschrift DE 102 46 715 relates to a composting installation with ventilation for the large-scale degradation of compostable waste, which is stored in a closed air system in a composting module and the rotting material is permeated by an aeration stream, wherein the rotting material rests on a conveying floor, which is configured as a longitudinal conveyor, which conveys the rotting material from the inlet side of the composting module toward the discharge side.

US 4 798 802 relates to a composting reactor for organic material, wherein the reactor floor comprises a number of longitudinal strips, which are mounted slidably for longitudinal reciprocating motion relative to the side and top walls of the reaction chamber and are located parallel to each other along the longitudinal chamber. Between these longitudinal reciprocating strips, the composting reactor is provided with intermediate aeration pipelines for aerating the organic material. The composting reactor further comprises means for discharging the aeration gases from the chamber in order to guarantee a predetermined flow of said gases through the chamber.

European application EP 0 334 460 relates to a conveying floor comprising parallel beams that are slidable along a carrying structure, wherein the beams or a number of groups of beams, at equal distance over the width of the floor, are each associated with a drive, wherein the beams or groups of beams are slidable in the longitudinal direction either together or relative to one another.

US 5 409 831 relates to a continuous composting device, comprising an enclosed elongated tunnel, an inlet for refuse, an outlet for compost, rails that extend upward from a floor of the tunnel and along the length of the tunnel, and a plurality of generally rectangular conveyor trays, which slide on the rails from one end to the other end, wherein each tray has a porous carrying surface.

FR 2820421 relates to an installation for treating organic materials by composting, comprising a closed holder that is equipped with a mechanical system for moving the bottom forward so that during composting the product can be moved in the holder, and a ventilation system consisting of a fan that is connected to a perforated floor or to a grid or to diffusion channels through channels and wherein the air is pumped inwards.

European application EP 3095771 relates to an installation for treating a residual biomaterial with air, wherein the residual biomaterial is present on a floor surface, said installation comprising means for supplying air to said residual biomaterial, wherein the means for supplying air comprise a number of regularly spaced pipes, which are provided with at least two outlet openings, which are positioned under the floor surface.

One aspect of the present invention is thus the provision of a method for treating organic residual or waste material with air in an environmentally friendly and effective manner in order to reprocess the residual material and to upgrade it to usable residual substances.

Another aspect of the present invention is the provision of a method for treating organic residual or waste material with air in an environmentally friendly and effective manner, wherein the amount of energy used for this is kept to a minimum.

The present invention thus relates to a device for composting organic material, as claimed in claim 1.

Using the aforementioned device, the present inventors found that one or more of the aforementioned aspects are satisfied. It was in particular shown to be favorable to provide the aforementioned parallel elongated slats with an air channel extending over almost the entire length thereof, said air channel being integrated in the slat, wherein the air channel is provided with one or more openings. Now, on supplying air to the air channel, the air supplied will leave the air channel via the openings and will be supplied to the underside of the organic material present on the aforementioned loading floor. Said openings are located on the running surface of the loading floor. These openings ensure good distribution of the supplied air in the organic residual or waste material lying on the loading floor. In one embodiment, almost all the parallel elongated slats are provided with an air channel with openings for supplying air to the underside of the organic material present on the aforementioned loading floor. It is also possible in one embodiment that some parallel elongated slats are not provided with an air channel. In the description given hereunder, the terms slat and floor slat have the same meaning.

In one embodiment of the parallel elongated slats, one or more slats, on the side opposite where the inlet of air takes place, are provided with a detachable closing device. Said construction makes it possible for the air channel integrated with the slat to be cleaned internally, for example by flushing with water, in particular by means of for example a drainage system.

Owing to the specific construction of the loading floor, for filling the loading floor with organic residual or waste material it is thus unnecessary to use heavy machinery, such as tractors, shovels, tailboard trucks, barrows and telescopic handlers.

The present device is suitable for use as a mobile device, namely a device that is movable and can be set down on site and, after use, can be removed again, but it can also be used in stationary form in civil engineering. An example of a mobile device is the application of the present invention in a container, for example 6.096m (20 foot) standard height, 12.192m (40 foot) standard height, 12.192m (40 foot) high-cube, 13.716m (45 foot) high-cube, 14.630m (48 foot) high-cube and 16.154m (53 foot) high-cube, but the device is in no case limited to a particular dimension. An example of a stationary configuration is an integrated dynamic active loading and aeration floor as a civil engineering component, which may consist of one or more reactors equipped with a dynamic active loading and aeration floor as described above for composting organic material.

A floor built up from a plurality of mutually parallel elongated slats, which are connected operationally to a drive unit in order to be moved relative to the supporting structure in the longitudinal direction of the slats in a reciprocating motion, is known per se, for example from NL 2005347, NL 1032356, US 6,019,215 and US 5,560,472; said documents may be considered regarding the construction of the moving loading floor.

In one embodiment of the device, the openings of the air channel extend over almost the entire longitudinal direction of the slats.

The present invention is not limited to a particular number of discharge orifices located in the parallel elongated slats. However, in a particular embodiment it is desirable to allow the discharge orifices, viewed in the longitudinal direction of the parallel elongated slats, to "jump" mutually so that for the elongated slats located next to each other, there are in fact rows of discharge orifices located next to each other, wherein the positions of the discharge orifices are displaced in the rows relative to each other, so that there is no question of discharge orifices located exactly next to each other. This avoids certain regions not being supplied with air and thus "lagging behind" in the composting process. According to another embodiment, the discharge orifices are positioned so that the discharge orifices, in rows relative to each other, are located exactly next to each other. It is namely desirable that the whole amount of organic material present on the loading floor is composted approximately uniformly so that there is no question of "black spots", namely spots where a process takes place without a sufficient amount of oxygen for composting, namely in low-oxygen or anaerobic conditions.

It is preferred that the aforementioned discharge orifices are positioned over the length of the mutually parallel elongated slats, which thus ensures that organic residual or waste material lying on the substrate is treated with air uniformly, which will lead to a uniform, totally aerobic composting process.

In one example of the device, the dimensions of the openings are made such that the amount of air that is supplied by the openings to the organic material present on the aforementioned loading floor is almost identical for each of the openings. According to such a construction, it is guaranteed that the air to be supplied is supplied to the organic residual or waste material lying on the substrate via all the openings present in the mutually parallel elongated slats.

The device is provided on the end thereof with a space obtained with a partition, wherein the partition extends over the full height and width of the device, the space thus obtained being separated from the reactor space in which the composting of organic material is carried out. In said space, which is separated from the reactor space, it is possible to place the equipment and installations necessary for controlling the composting process in the reactor space. Consequently there will be no question of said space containing any organic material to be composted.

In another embodiment it is possible that the aforementioned space where the air treatment takes place is physically separated from the reactor space where the composting takes place. In one embodiment it is for example a question of a separate mobile container for the air treatment, said separate mobile container being connected by means of for example flexible hoses to the container of which the reactor space forms a part. Physically separated spaces for the reactor and the air treatment are also possible for a stationary configuration.

In one example of the device, the aforementioned space separated from the reactor space is provided with one or more air distribution chambers, said one or more air distribution chambers being connected to two or more pressure chambers, wherein each pressure chamber is coupled to a whole row of floor slats wherein each floor slat comprises an air channel extending over almost the entire length thereof, wherein the air channels of the whole row of floor slats are provided with air via the aforementioned pressure chamber. In one embodiment of at least two separate pressure chambers that move together, each pressure chamber is coupled to a row of mutually parallel elongated slats, which are connected operationally to the drive unit in order to be moved relative to the supporting structure in the longitudinal direction of the slats in a reciprocating motion in order to move the aforementioned organic material onto the loading floor or remove it from the loading floor. The separate pressure chambers thus move together in the longitudinal direction of the slats in a reciprocating motion in the longitudinal direction of the reactor. Via the pressure chambers that move together, air is supplied to the integrated air channels present in the aforementioned one or more mutually parallel elongated slats.

The aforementioned one or more air distribution chambers are connected via one or more pressure chambers to the air channels present in the aforementioned one or more mutually parallel elongated slats for supplying air to them, wherein in particular the aforementioned one or more pressure chambers can move together in a reciprocating motion in the longitudinal direction of the slats. This kind of construction makes it possible, in a simple and practically feasible way, to supply air to the air channels of the aforementioned parallel elongated slats, said air channels being provided with one or more openings. This supply of air to the underside of the organic material present on the aforementioned loading floor is required to allow the composting process to take place.

The aforementioned pressure chambers are each connected to a row of mutually parallel elongated slats, wherein the elongated slats connected to a pressure chamber always "jump" relative to each other. The pressure chambers extend almost over the width of the loading floor and are at right angles to the direction of movement of the row of mutually parallel elongated slats.

In one embodiment of for example three separate pressure chambers, designated first pressure chamber, second pressure chamber and third pressure chamber, wherein the row of mutually parallel elongated slats is indicated as A1, B1, C1, A2, B2, C2 and so on, the first pressure chamber is connected to the slats indicated as An, wherein n is the part number of slats of the loading floor, the second pressure chamber is connected to the slats indicated as Bn, wherein n is the part number of slats of the loading floor, and the third pressure chamber is connected to the slats indicated as Cn, wherein n is the part number of slats of the loading floor. The total number of mutually parallel elongated slats is thus An + Bn + Cn. If for example the complete loading floor is assembled from twenty-four floor slats, then row A comprises eight slats (A1, A2...A8), row B comprises eight slats (B1, B2...B8) and row C (C1, C2...C8) also comprises eight slats.

For an embodiment wherein there are for example four separate pressure chambers, indicated as first pressure chamber, second pressure chamber, third pressure chamber and fourth pressure chamber, wherein the row of mutually parallel elongated slats is indicated as A1, B1, C1, D1, A2, B2, C2, D2 and so on, the first pressure chamber is connected to the slats indicated as An, the second pressure chamber is connected to the slats indicated as Bn, the third pressure chamber is connected to the slats indicated as Cn, and the fourth pressure chamber is connected to the slats indicated as Dn, wherein n is always the part number of slats of the loading floor. The total number of mutually parallel elongated slats in this embodiment is thus An + Bn + Cn + Dn.

The present invention is not limited to a particular number of pressure chambers but the number of pressure chambers is at least two.

The advantage of this kind of construction, wherein the pressure chambers are always connected to a row of mutually parallel elongated slats, said slats not being adjacent to each other but being separated by slats that are connected to another pressure chamber, is that a more uniform air distribution is brought about in the reactor space, thus guaranteeing a stable, uniform composting process. An embodiment of this kind, in which there are several pressure chambers that supply air to several rows of mutually parallel elongated slats, also allows different air flow rates to be created at certain positions in the reactor space, said conditions contributing to a uniform composting process.

In one example, the aforementioned one or more pressure chambers may each move separately (B) together with a separate row of mutually parallel elongated slats (9) of the loading floor. Depending on the desired direction of motion of the charge of organic residual or waste material, the slats A1-A8, B1-B8 and C1-C8 and the three pressure chambers connected to them may move jointly, so as to produce reciprocating motion of the charge of organic residual or waste material on the loading floor. In order to make this motion possible, the slats and the pressure chambers connected thereto may also be moved in partial grouping. With a reciprocating motion (B) in the longitudinal direction of the slats, as driven by the drive unit, with movement of slats A1-A8 the first pressure chamber will also be moved. With movement of slats B1-B8 the second pressure chamber will be moved, and with movement of slats C1-C8 the third pressure chamber will be moved.

In one embodiment it is possible to disconnect the air channels from the air supply system, so that the air channels can be cleaned internally, for example by flushing through with water.

In one example of the device, the aforementioned one or more air distribution chambers are connected, using one or more flexible hoses, to the aforementioned one or more pressure chambers. These flexible hoses are desirable in order to be able to follow the reciprocating motion in the longitudinal direction of the slats. In one example the pressure chambers are connected using flexible couplings to the reciprocating mutually parallel elongated slats, to compensate for vibrations.

The invention relates to the integration of active aeration by means of air channels integrated in the moving floor slats, which are connected to pressure chambers, which are movable together with the moving floor slats, wherein the aforementioned pressure chambers can in their turn be connected by means of flexible hoses to an air distribution chamber. Owing to the aforementioned integration of the air channels in the moving floor slats, a continuous, uniform aeration is optimally possible, regardless of the dynamic character of the loading floor.

In another embodiment the aforementioned one or more air distribution chambers are connected, using one or more pipelines of rigid construction, to the aforementioned one or more pressure chambers. A consequence of this embodiment is that when the pressure chambers move, the air distribution chambers will also be moved. Connection to the air channels as integrated in the row of reciprocating mutually parallel elongated slats may also be made by means of a flexible hose, which makes air supply possible to the air channel of each individual floor slat. The flexible hose has a sufficient length to be able to follow the reciprocating motion in the longitudinal direction of the slats.

In one example of the device, the aforementioned reactor space is provided with means for supplying water to the reactor space. Supply of water is desirable in certain situations to allow the composting process to take place optimally. Besides water, other liquids may also be supplied, for example liquids that comprise minerals, but also for example a thin manure fraction or an aqueous stream from a gas scrubber.

In one example of the device, the aforementioned reactor space is provided with means for withdrawing and/or discharging heat from the reactor space.

In one example of the device, the aforementioned device is provided with a measuring and control system for monitoring the conditions in the reactor space in which the composting of organic material is carried out.

In one example of the device, the aforementioned reactor space is provided with means for discharging and trapping gases from the reactor space, which are formed in the composting of organic material.

The present invention also provides a method for composting organic material, wherein the organic material to be composted is aerated in a device as described above.

The method for composting organic material comprises the following steps:
bringing organic material onto the loading floor,
moving the organic material on the loading floor by executing a reciprocating motion of the slats,
supplying air to the underside of the organic material present on the aforementioned loading floor in order to compost the organic material,
stopping the supply of air, and
removing the thus composted material from the loading floor by executing a reciprocating motion of the slats.

According to one example, moving the organic material on the loading floor comprises executing a reciprocating motion of a row of interconnected slats, said row of slats being connected to a common pressure chamber, wherein the aforementioned reciprocating motion comprises successively moving a row of slats and the pressure chamber connected thereto, followed by a subsequent row of slats and pressure chamber(s) connected thereto. It is also possible to perform combined movement of all of the slats and the pressure chambers connected thereto, in the case of movement of the organic material on the loading floor.

Examples of the organic material to be composted are selected from the group of animal manure such as cattle manure, turkey manure, chicken manure, broiler manure, pig manure, sheep and goat manure, mink manure, duck manure, rabbit manure, horse manure and manure of other animals in both solid and liquid form, organic waste, domestic organic waste, in particular fruit and vegetable organic waste, waste from food production and processing, vegetable residual streams, for example such as residual materials from mushroom growing, and sludge streams from water-treatment plants, organic industrial residual and waste streams, organic waste from agriculture, horticulture, aquaculture, forestry and food preparation and processing, waste from sugar processing, the dairy industry, waste from the production of alcoholic and nonalcoholic drinks, contaminated organic waste streams, waste from thermal processes, and/or one or more combinations thereof.

From the energy and ecology viewpoint, it is desirable that the air stream arising from the organic residual or waste material is reused usefully. In the composting process, generally heat is generated in the organic residual or waste material, and this heat can be recovered and thus can be reused usefully.

The present inventors found that the flow rate of the air stream to be supplied for the composting process is in particular in a range of 0-70 m/s, in particular 20-60 m/s, preferably 30-50 m/s, wherein in particular the air to be supplied has a temperature in the range 5-80°C, in particular 10-70°C, preferably 40-70°C.

In a particular embodiment it is possible for the air stream to be supplied to undergo a pretreatment, for example to adjust the temperature and air humidity. It is also possible to vary one or more process variables, selected from the group of flow rate, temperature, oxygen content and air humidity, of the air stream to be supplied during the composting process. This means that during implementation of the present method one is able to adjust for example one or more of flow rate, temperature, oxygen content and air humidity. Thus, various air treatment programs may be applied, for example depending on the starting residual material, or depending on the desired finished product.

In the method according to the present invention it is also possible to add one or more auxiliary substances, for example selected from the group of lime, potassium, phosphorus, nitrogen and micronutrients, to the organic residual or waste material, preferably after the composting treatment. These auxiliary substances have the aim of making the treated organic residual or waste material suitable for a particular application. For example, by adding lime to adjust the acidity. An example of an auxiliary substance is ground eggshells for calcium; this auxiliary substance also contains other constituents, such as zinc, besides a high percentage of calcium. It is also possible to turn the organic residual or waste material lying on the loading floor, during or after composting. "Turning" is to be understood as loosening, plowing up or lifting of organic residual or waste material so that the process of composting of the residual products still present in the organic residual or waste material is accelerated. In a particular embodiment of the present method it is possible to subject the organic residual or waste material to a comminution step before the composting is carried out.

The present disclosure further relates to a slat that comprises an air channel extending over almost the entire length thereof, said air channel being provided with one or more openings. Said slat is used for example for making a loading floor assembled from said slats, said loading floor being suitable for composting organic residual or waste material, particularly in a device as described above, or to be used in a method as described above.

The present invention is explained hereunder on the basis of a number of figures, said figures in no case to be regarded as limiting.
Fig. 1 shows a front view of the present device.
Fig. 2 shows a top view of the present device as shown in Fig. 1.
Fig. 3 shows a front view of a floor slat of the present invention.
Fig. 4 shows the individual steps of the method of the present invention.
Fig. 5A shows a view of a particular position of the loading floor according to the present invention.
Fig. 5B shows a view of a particular position of the loading floor according to the present invention.

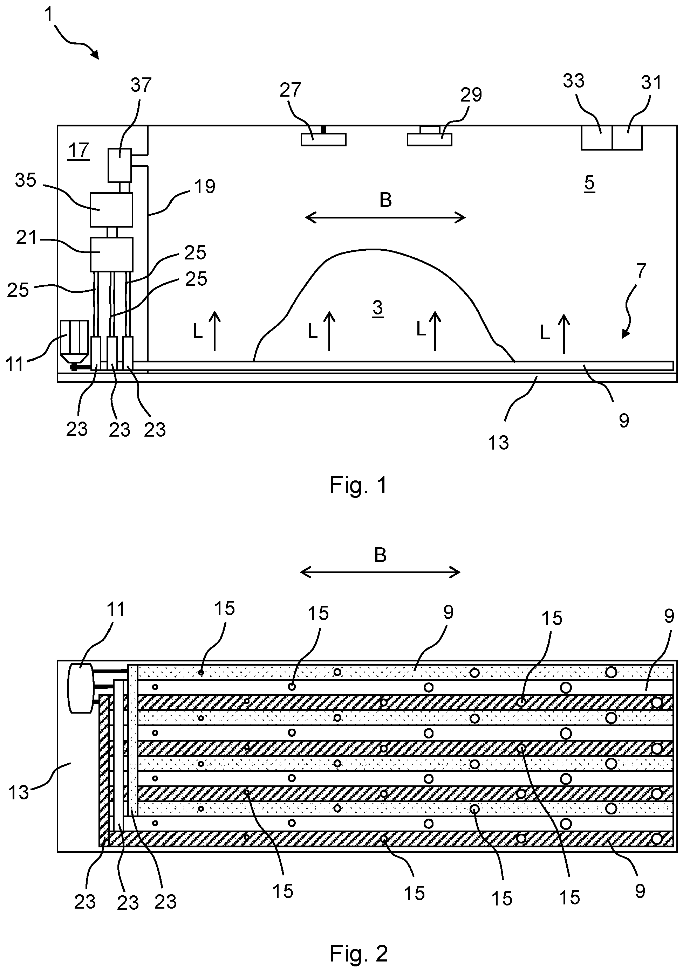

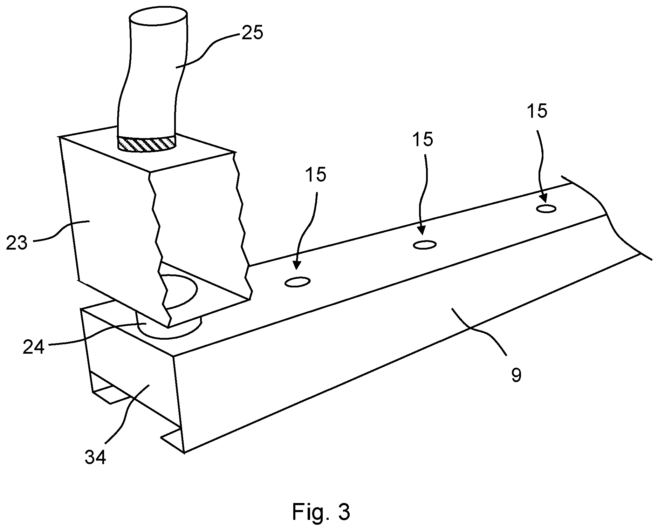

Fig. 1 shows a view of a device (1) for composting organic material (3), in particular a container comprising a reactor space (5) provided with a loading floor (9), a supporting structure (13) that supports the loading floor, and a drive unit (11) that is fastened to the supporting structure (13), wherein the loading floor comprises a plurality of mutually parallel elongated slats (9), which are connected operationally to the drive unit (11) in order to be moved relative to the supporting structure (13) in the longitudinal direction of the slats in a reciprocating motion (B) in order to bring the organic material (3) onto the loading floor or remove it from the loading floor, wherein the aforementioned parallel elongated slats comprise an air channel extending over almost the entire length thereof (34), said air channel being provided with one or more openings (15) for supplying air (L) to the underside of the organic material (3) present on the loading floor. For further specification of slat (9), reference is to be made to the description in Fig. 3. Pressure chambers (23) are supplied with air via one or more flexible hoses (25) connected to an air distribution chamber (21), delivered by means of device (35), for example a fan.

It is possible, by the reciprocating motion (B), to move the organic material (3) over the loading floor so that a layer is formed that has the same height over almost the whole surface of the loading floor (9), regardless of whether the material to be treated is brought into the reactor from one or more central points from above (not shown) or from the end (not shown, the right-hand side in the figure). Device (1) is provided, on one side thereof (on the left side in the figure), with a space (17) obtained by a partition (19), wherein the partition (19) extends over the complete height and width of the device (1). The space (17) is thus separated from reactor space (5) in which the composting of organic material (3) is carried out. Space (17) may be regarded as the "technical space".

Fig. 2 shows an embodiment wherein discharge orifices (15), viewed in the longitudinal direction of mutually parallel elongated slats (9), "jump" mutually so that for the elongated slats located next to each other (9) there are in fact rows of discharge orifices (15) located directly next to each other, wherein the positions of discharge orifices (15), in the rows relative to each other, are displaced so that there is no question of discharge orifices (15) located exactly next to each other. This avoids certain regions not being supplied with air and thus "lagging behind" in the composting process. Through mutual displacement of the mutually parallel elongated slats (9) it is also possible that the rows of discharge orifices (15) located next to each other do not "jump" relative to each other (not shown). As mentioned above, in another embodiment (not shown) the discharge orifices are positioned so that the discharge orifices, in rows relative to each other, are located exactly next to each other.

Also in Fig. 2, the dimensions of discharge orifices (15) are such that the amount of air that is supplied by these to the organic material (3) present on loading floor (9) is almost identical for each of the discharge orifices (15). In practice, for example discharge orifices (15) at the beginning of the mutually parallel elongated slats (9), i.e. close to the air supply position, will have a discharge orifice (15) that is smaller than discharge orifices (15) of the openings that are located at the end of the mutually parallel elongated slats (9). Fig. 2 shows an embodiment wherein the loading floor (9) comprises a total number of twelve slats (9), wherein there are three separate pressure chambers (23), and each pressure chamber (23) is connected to a total of four slats. The slats shown shaded are connected to the pressure chamber shown shaded, the same applies to the slats and pressure chamber shown with dotted lines and the slats and pressure chamber shown unmarked. Fig. 2 clearly shows that each pressure chamber (23) is connected to a row of slats (9).

Technical space (17) is provided with one or more air distribution chambers (21) that are connected to mutually parallel elongated slats (9) for supplying air (L) thereto. Air distribution chambers (21) are connected via one or more pressure chambers (23) to mutually parallel elongated slats (9) for supplying air (L) thereto. Air (L) will move through the air channel and will be forced in the upward direction through the discharge orifices and will be led through organic material (3) to allow composting thereof to occur. One or more pressure chambers (23) are movable in a reciprocating motion (B) in the longitudinal direction of the slats (9) and connected by means of one or more flexible hoses (25) to air distribution chambers (21). Reactor space (5) is provided with means (27) for supplying for example water or other liquid fractions to reactor space (5), means (29) for withdrawing and/or discharging heat from reactor space (5), as well as being provided with means (33) for the discharge and capture of gases, which are formed in the composting of organic material (3), from reactor space (5). Device (1) is also provided with a measuring and control system (31) for monitoring the conditions in reactor space (5) in which the composting of organic material (3) is carried out. Reactor space (5) may be filled in a usual way with material to be composted, for example via one or more intakes located at the top (not shown), or via an opening (not shown) at the end (the right-hand side in the figure), or else via an opening (not shown) on the long side of reactor space (5).

Fig. 3 shows a front view of a floor slat of the present invention. Slat (9) comprises an air channel extending over almost the entire length thereof (34), said air channel (34) being provided with one or more openings (15) for supplying air (L) to the underside of the organic material present on the aforementioned loading floor. A number of these mutually parallel elongated slats (9) form the loading floor of reactor space (5). Said slat (9) is removable from the loading floor and may thus be replaced or repaired easily. Slat (9) is closed both on the side where air inlet takes place and at the end of the slat, thus allowing the air supplied to air channel (34) only to escape via openings (15). Both ends are optionally provided with a detachable closing device (not shown). A construction of this kind makes it possible to clean the air channel internally, for example by flushing with water, so as to clear any blockages of the openings. A connecting piece (24) for connecting pressure chamber (23) to slat (9) is shown. The air supplied to line (25) is led to pressure chamber (23) and is supplied via connecting piece (24) to air channel (34). The air thus supplied leaves slat (9) via one or more openings (15) for supplying air (L) to the underside of the organic material present on the aforementioned loading floor. There may thus be said to be communication between line (25), pressure chamber (23), connecting piece (24) and the interior of slat (9), and through this communication, air can be supplied to openings (15) so as to aerate the underside of the organic material present on the aforementioned loading floor.

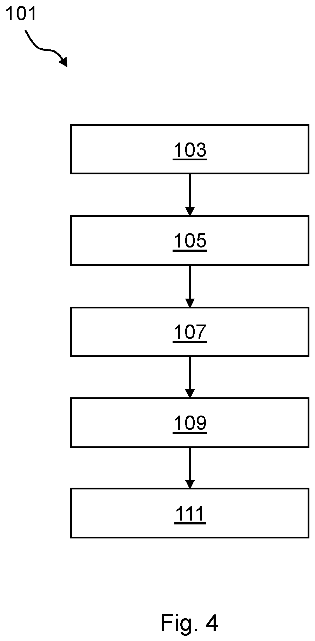

Fig. 4 shows the individual steps of the method of the present invention. The method comprises the following steps: bringing organic material onto the loading floor (103), moving the organic material on the loading floor (105) by executing a reciprocating motion of the slats, supplying air (107) to the underside of the organic material present on the aforementioned loading floor in order to compost the organic material, ending the supply of air (109), and removing the thus composted material from the loading floor (111) by executing a reciprocating motion of the slats. It is also possible to execute a reciprocating motion of the slats during composting. It is also possible to add water or other liquid fractions to the organic material before, during and after composting. To "start" the composting process, inoculum may be added according to a usual method. Air may be supplied continuously or with interruptions, and the air flow rate can also be adjusted. It is also possible to pretreat the air to be supplied, for example to humidify it or adjust the temperature. The composting process may thus be monitored and adapted in real time. The measurement data of the composting process may be sent via a wireless connection to a central station and the composting process may thus take place almost automatically. The charging of the loading floor may for example take place via an intake (not shown) provided at the top of the device (1), but also via an intake (not shown) at the end, or an intake (not shown) in the wall.

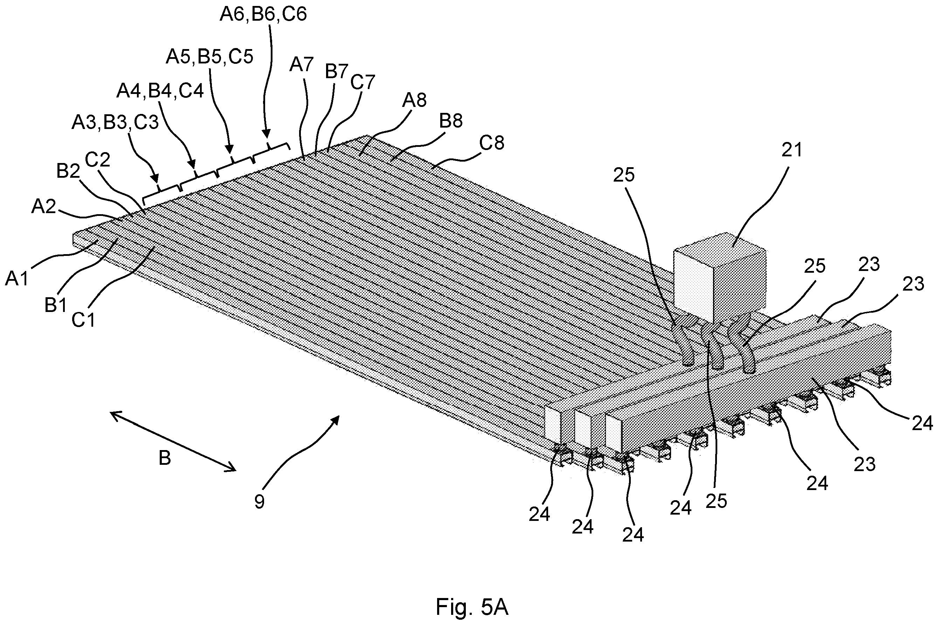

Fig. 5A shows a view of a particular position of a loading floor according to the present invention consisting of a plurality of mutually parallel elongated slats (9). In Fig. 5A there are three separate pressure chambers (23), which are positioned at right angles to the direction of movement of the loading floor (9). Pressure chambers (23) are supplied with air via one or more flexible hoses (25) connected to an air distribution chamber (21), delivered by means of device (35), for example a fan. A connecting piece (24) is shown for connecting pressure chamber (23) to slat (9). The air thus supplied to line (25) is led to pressure chamber (23) and is supplied via connecting piece (24) to air channel (34). Other devices, as shown in Fig. 1, are omitted here for simplicity. It can clearly be seen in Fig. 5A that the rear pressure chamber (23) shown in the figure, which may also be called the first pressure chamber, is connected to slats designated A1, A2, A3, A4, A5, A6, A7 and A8. The middle pressure chamber (23) shown in the figure, which may also be called the second pressure chamber, is connected to slats designated B1, B2, B3, B4, B5, B6, B7 and B8. The front pressure chamber (23) shown in the figure, which may also be called the third pressure chamber, is connected to slats designated C1, C2, C3, C4, C5, C6, C7 and C8. In Fig. 5A there is thus a loading floor consisting of twenty-four separate slats (9), wherein three different pressure chambers (23) are each connected to a row of eight slats and at the same time supplies them with air. The drive of slats (9) takes place by means of drive unit (11), as shown in Fig. 1. With a reciprocating motion (B) in the longitudinal direction of the slats, driven by drive unit (11), the first pressure chamber (23) will thus be moved with the motion of slats A1-A8. With the motion of slats B1-B8, the second pressure chamber will be moved. With the motion of slats C1-C8, the third pressure chamber will be moved. In Fig. 5A it is also clearly shown that the first pressure chamber, connected to slats designated A1, A2, A3, A4, A5, A6, A7 and A8, extends over almost the width of the loading floor, in particular except for the width that slats B8 and C8 occupy. Similar reasoning applies to the width over which the second and third pressure chambers extend.

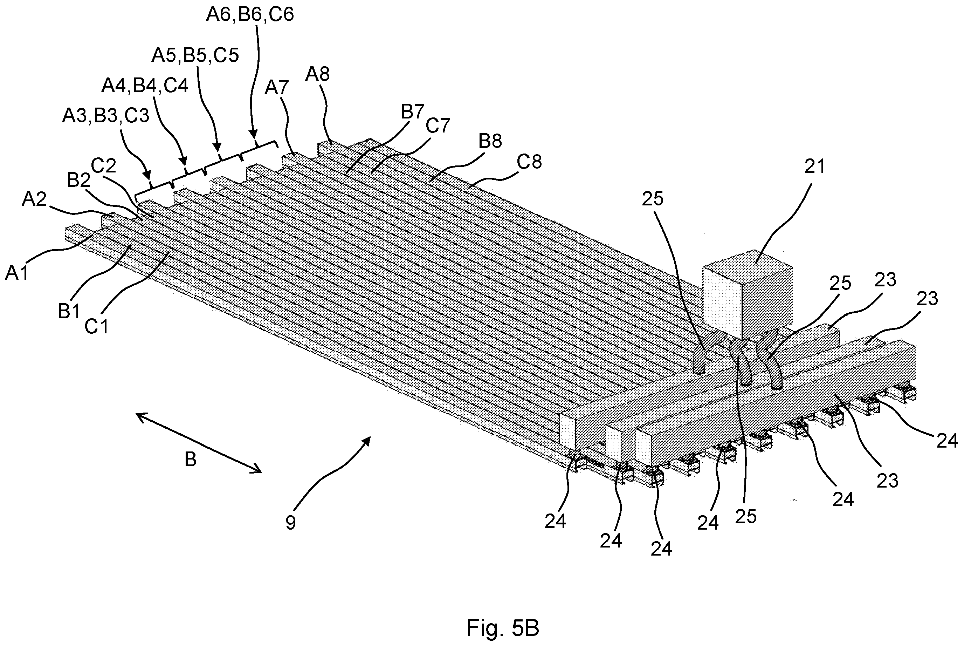

Fig. 5B shows a view of a particular position of the loading floor according to the present invention, wherein after execution of movement by drive unit (11) in the longitudinal direction, slats A1-A8, just like the first pressure chamber (23), are moved relative to a situation as shown in Fig. 5A. A connecting piece (24) is shown for connecting pressure chamber (23) to slat (9). The air thus supplied to line (25) is led to pressure chamber (23) and is supplied via connecting piece (24) to air channel (34). In a subsequent step (not shown), slats B1-B8 will also be moved by drive unit (11) toward the first pressure chamber, which has already moved, with the result that the second pressure chamber (23) also moves in the same longitudinal direction. In a subsequent step (not shown) slats C1-C8 will be moved by the drive unit (11), with the result that the third pressure chamber (23) also moves in the same longitudinal direction toward the first and second pressure chamber that have already moved. Depending on the desired direction of motion of the charge of organic residual or waste material (3), all slats (9) A1-A8, B1-B8 and C1-C8 and the three pressure chambers connected to them may also move jointly to impart a reciprocating motion to the charge of organic residual or waste material (3) on the loading floor (10).

Although three pressure chambers are mentioned in Fig. 5A and 5B, the present invention is not limited thereto, or to the number of slats stated therein.

## Claims

1. A device (1) for composting organic residual or waste material (3), comprising a reactor space (5) provided with a dynamic active loading and aeration floor, i.e. loading floor, a supporting structure (13) that supports the aforementioned loading floor, and a drive unit (11) that is fastened to the aforementioned supporting structure, wherein the aforementioned loading floor comprises a plurality of mutually parallel elongated slats (9), which are connected operationally to the aforementioned drive unit in order to be moved relative to the supporting structure in the longitudinal direction of the slats in a reciprocating motion (B) in order to move the aforementioned organic material onto the loading floor or remove it from the loading floor, wherein the aforementioned parallel elongated slats comprise an air channel extending over almost the entire length thereof (34), said air channel being provided with one or more openings (15) for supplying air (L) to the underside of the organic material present on the aforementioned loading floor, the device being provided on one end thereof with a space (17) obtained by a partition (19) extending over the full height and width of the device, the space thus obtained being separated from reactor space (5), wherein said space is provided with one or more air distribution chambers (21), said one or more air distribution chambers being connected to said one or more mutually parallel elongated slats for supply of air thereto, wherein said one or more air distribution chambers are connected via one or more pressure chambers (23) to said one or more mutually parallel elongated slats for supply of air thereto via the air channel (34) integrated in said slat, wherein each slat (9) is provided with its own air channel (34), wherein said one or more pressure chambers are movable in a reciprocating motion (B) in the longitudinal direction of the slats.

2. The device as claimed in claim 1, **characterized in that** one or more openings (15) of the air channel extend over almost the whole longitudinal direction of the slats.

3. The device as claimed in one or more of claims 1-2, **characterized in that** the dimensions of the one or more openings (15) are such that the amounts of air delivered via the air channel (34) extending over almost the entire length thereof and supplied via the one or more openings (15) to the organic material present on the aforementioned loading floor, are almost identical for each of the openings.

4. The device as claimed in one or more of claims 1-3, **characterized in that** the aforementioned one or more air distribution chambers are connected by means of one or more flexible hoses (25) to the aforementioned one or more pressure chambers.

5. The device as claimed in one or more of claims 1-4, **characterized in that** the aforementioned one or more pressure chambers extend over almost the width of the loading floor and are positioned perpendicular to the direction of movement of the row of mutually parallel elongated slats.

6. The device as claimed in one or more of claims 1-5, **characterized in that** the aforementioned one or more pressure chambers are each connected to a separate row of mutually parallel elongated slats.

7. The device as claimed in one or more of claims 1-6, **characterized in that** the aforementioned reactor space is provided with means (27) for supplying water or other liquid fractions to the reactor space, wherein said space (17) is preferably provided with means (29) for withdrawing and/or discharging heat from the reactor space, especially wherein said device is provided with a measuring and control system (31) for monitoring the conditions in the reactor space in which the composting of organic material is carried out, especially wherein said reactor space is provided with means (33) for discharging and treating gases that are formed in the composting of organic material, from the reactor space.

8. A method (101) for composting organic material in a device as claimed in one or more of claims 1-7, wherein the organic material to be composted is aerated, **characterized in that** the method comprises the following steps:
bringing (103) organic residual or waste material onto the loading floor,
moving the organic material on the loading floor (105) by executing a reciprocating motion of the slats,
supplying air (107) to the underside of the organic material present on the aforementioned loading floor in order to compost the organic material,
ending the supply of air (109), and
removing (111) the thus composted material from the loading floor by executing a reciprocating motion of the slats.

9. The method for composting organic material as claimed in claim 8, **characterized in that** movement of the organic material on the loading floor (105) comprises execution of a reciprocating motion of a row of interconnected slats, said row of slats being connected to a common pressure chamber, wherein the aforementioned reciprocating motion comprises successively moving a row of slats and the pressure chamber connected thereto, followed by a subsequent row of slats and pressure chamber(s) connected thereto.

10. The method as claimed in one or more of claims 8-9, **characterized in that** the organic residual or waste material to be composted is selected from the group of animal manure such as cattle manure, turkey manure, chicken manure, broiler manure, pig manure, sheep and goat manure, mink manure, duck manure, rabbit manure, horse manure and manure of other animals in both solid and liquid form, organic waste, domestic organic waste, particularly fruit and vegetable organic waste, waste from food production and processing, vegetable residual streams, for example such as residual materials from mushroom growing, and sludge streams from water-treatment plants, organic industrial residual and waste streams, organic waste from agriculture, horticulture, aquaculture, forestry and food preparation and processing, waste from sugar processing, the dairy industry, waste from the production of alcoholic and nonalcoholic drinks, contaminated organic waste streams, waste from thermal processes, and/or one or more combinations thereof.

11. The method as claimed in one or more of claims 8-10, **characterized in that** the air stream to be supplied for the composting process is in a range of at least 20 m/s, preferably at least 30 m/s, at most 70 m/s, preferably at most 60 m/s, more preferably at most 50 m/s, wherein in particular the air to be supplied has a temperature in the range 5-80°C, in particular 10-70°C, preferably 40-70°C.

## Patentansprüche

1. Vorrichtung (1) zur Kompostierung von organischem Rest- oder Abfallmaterial (3), umfassend einen Reaktorraum (5), der mit einem dynamischen aktiven Lade- und Belüftungsboden, d. h. einem Ladeboden, bereitgestellt ist, eine Tragstruktur (13), die den vorgenannten Ladeboden trägt, und eine Antriebseinheit (11), die an der vorgenannten Tragstruktur befestigt ist, wobei der vorgenannte Ladeboden eine Vielzahl von zueinander parallelen länglichen Lamellen (9) umfasst, die mit der vorgenannte Antriebseinheit wirkverbunden ist, um bezogen auf die Tragstruktur in der Längsrichtung der Lamellen in einer Hin- und Herbewegung (B) bewegt zu werden, um das vorgenannte organische Material auf den Ladeboden zu bewegen oder von dem Ladeboden zu entfernen, wobei die vorgenannten parallelen länglichen Lamellen einen Luftkanal (34) umfassen, der sich über nahezu die gesamte Länge davon erstreckt, wobei der Luftkanal mit einer oder mehreren Öffnungen (15) zum Zuführen von Luft (L) zu der Unterseite des auf dem vorgenannten Ladeboden vorhandenen organischen Materials bereitgestellt ist, wobei die Vorrichtung an einem Ende davon mit einem Raum (17) bereitgestellt ist, der durch eine Trennwand (19) erhalten wird, die sich über die gesamte Höhe und Breite der Vorrichtung erstreckt, wobei der so erhaltene Raum von dem Reaktorraum (5) getrennt ist, wobei der Raum mit einer oder mehreren Luftverteilungskammern (21) bereitgestellt ist, wobei die eine oder mehreren Luftverteilungskammern mit der einen oder den mehreren zueinander parallelen länglichen Lamellen zur Zufuhr von Luft zu dieser verbunden sind, wobei die eine oder mehreren Luftverteilungskammern über eine oder mehrere Druckkammern (23) mit der einen oder den mehreren zueinander parallelen länglichen Lamellen zur Zufuhr von Luft zu dieser über den in die Lamelle integrierten Luftkanal (34) verbunden sind, wobei jede Lamelle (9) mit ihrem eigenen Luftkanal (34) bereitgestellt ist, wobei die eine oder mehreren Druckkammern in einer Hin- und Herbewegung (B) in der Längsrichtung der Lamellen bewegbar sind.

2. Vorrichtung nach Anspruch 1, **dadurch gekennzeichnet, dass** sich eine oder mehrere Öffnungen (15) des Luftkanals über nahezu die gesamte Längsrichtung der Lamellen erstrecken.

3. Vorrichtung nach einem oder mehreren der Ansprüche 1-2, **dadurch gekennzeichnet, dass** die Abmessungen der einen oder mehreren Öffnungen (15) so sind, dass die über den Luftkanal (34) gelieferten Luftmengen, die sich über nahezu die gesamte Länge davon erstrecken und über die eine oder mehreren Öffnungen (15) dem auf dem vorgenannten Ladeboden vorhandenen organischen Material zugeführt werden, für jede der Öffnungen nahezu identisch sind.

4. Vorrichtung nach einem oder mehreren der Ansprüche 1-3, **dadurch gekennzeichnet, dass** die vorgenannte eine oder mehreren Luftverteilungskammern mittels eines oder mehrerer flexibler Schläuche (25) mit der vorgenannten einen oder mehreren Druckkammern verbunden sind.

5. Vorrichtung nach einem oder mehreren der Ansprüche 1-4, **dadurch gekennzeichnet, dass** sich die vorgenannte eine oder mehreren Druckkammern über nahezu die Breite des Ladebodens erstrecken und senkrecht zu der Bewegungsrichtung der Reihe von zueinander parallelen länglichen Lamellen positioniert sind.

6. Vorrichtung nach einem oder mehreren der Ansprüche 1-5, **dadurch gekennzeichnet, dass** die vorgenannte eine oder mehreren Druckkammern jeweils mit einer getrennten Reihe von zueinander parallelen länglichen Lamellen verbunden sind.

7. Vorrichtung nach einem oder mehreren der Ansprüche 1-6, **dadurch gekennzeichnet, dass** der vorgenannte Reaktorraum mit Mitteln (27) zum Zuführen von Wasser oder anderen flüssigen Fraktionen zu dem Reaktorraum bereitgestellt ist, wobei der Raum (17) vorzugsweise mit Mitteln (29) zum Abgeben und/oder Abführen von Wärme von dem Reaktorraum bereitgestellt ist, wobei die Vorrichtung insbesondere mit einem Mess- und Steuersystem (31) zum Überwachen der Bedingungen in dem Reaktorraum, in dem die Kompostierung von organischem Material durchgeführt wird, bereitgestellt ist, wobei der Reaktorraum insbesondere mit Mitteln (33) zum Abführen und Behandeln von Gasen, die bei der Kompostierung von organischem Material gebildet werden, von dem Reaktorraum bereitgestellt ist.

8. Verfahren (101) zur Kompostierung von organischem Material in einer Vorrichtung nach einem oder mehreren der Ansprüche 1-7, wobei das zu kompostierende organische Material belüftet wird, **dadurch gekennzeichnet, dass** das Verfahren die folgenden Schritte umfasst:
Bringen (103) von organischem Rest- oder Abfallmaterial auf den Ladeboden,
Bewegen des organischen Materials auf dem Ladeboden (105) durch Ausführen einer Hin- und Herbewegung der Lamellen,
Zuführen von Luft (107) zu der Unterseite des auf dem vorgenannten Ladebodens vorhandenen organischen Materials, um das organische Material zu kompostieren,
Beenden der Luftzufuhr (109) und
Entfernen (111) des so kompostierten Materials von dem Ladeboden durch Ausführen einer Hin- und Herbewegung der Lamellen.

9. Verfahren zur Kompostierung von organischem Material nach Anspruch 8,
**dadurch gekennzeichnet, dass** die Bewegung des organischen Materials auf dem Ladeboden (105) eine Ausführung einer Hin- und Herbewegung einer Reihe von miteinander verbundenen Lamellen umfasst, wobei die Reihe von Lamellen mit einer gemeinsamen Druckkammer verbunden sind, wobei die vorgenannte Hin- und Herbewegung aufeinanderfolgendes Bewegen einer Reihe von Lamellen und der damit verbundenen Druckkammer, gefolgt von einer nachfolgenden Reihe von Lamellen und (einer) damit verbundenen Druckkammer(n) umfasst.

10. Verfahren nach einem oder mehreren der Ansprüche 8-9, **dadurch gekennzeichnet, dass** das zu kompostierende organische Rest- oder Abfallmaterial aus der folgenden Gruppe ausgewählt ist: Tierdung, wie etwa Kuhdung, Putendung, Hühnerdung, Hahnendung, Schweinedung, Schaf- und Ziegendung, Nerzdung, Entendung, Kaninchendung, Pferdedung und Dung von anderen Tieren in fester und flüssiger Form, organischen Abfällen, organischen Haushaltsabfällen, insbesondere organischen Obst- und Gemüseabfällen, Abfällen aus der Lebensmittelproduktion und -verarbeitung, pflanzlichen Restströmen, wie zum Beispiel Restmaterialien aus dem Pilzanbau, und Schlammströmen aus Wasseraufbereitungsanlagen, organischen industriellen Rest- und Abfallströmen, organischen Abfällen aus der Landwirtschaft, dem Gartenbau, der Aquakultur, der Forstwirtschaft und der Lebensmittelzubereitung und -verarbeitung, Abfällen aus der Zuckerverarbeitung, der Milchindustrie, Abfällen aus der Produktion alkoholischer und alkoholfreier Getränke, kontaminierten organischen Abfallströmen, Abfällen aus thermischen Prozessen und/oder einer oder mehreren Kombinationen davon.

11. Verfahren nach einem oder mehreren der Ansprüche 8-10, **dadurch gekennzeichnet, dass** der für den Kompostierungsprozess zuzuführende Luftstrom in einem Bereich von mindestens 20 m/s, bevorzugt mindestens 30 m/s, höchstens 70 m/s, bevorzugt höchstens 60 m/s, noch bevorzugter höchstens 50 m/s, liegt, wobei insbesondere die zuzuführende Luft eine Temperatur im Bereich von 5-80 °C, insbesondere 10-70 °C, bevorzugt 40-70 °C, aufweist.

## Revendications

1. Dispositif (1) pour le compostage de matière organique résiduelle ou déchets (3), comprenant un espace de réacteur (5) doté d'un plancher de chargement et d'aération dynamique actif, c'est-à-dire un plancher de chargement, une structure de support (13) qui supporte le plancher de chargement susmentionné, et une unité d'entraînement (11) qui est fixée à la structure de support susmentionnée, dans lequel le plancher de chargement susmentionné comprend une pluralité de lattes allongées (9) parallèles entre elles, qui sont reliées fonctionnellement à l'unité d'entraînement susmentionnée afin d'être déplacées par rapport à la structure de support dans la direction longitudinale des lattes selon un mouvement alternatif (B) afin de déplacer la matière organique susmentionnée sur le plancher de chargement ou de la retirer du plancher de chargement, dans lequel les lattes allongées parallèles susmentionnées comprennent un canal d'air (34) s'étendant sur presque toute la longueur de celles-ci, ledit canal d'air étant doté d'une ou plusieurs ouvertures (15) pour fournir de l'air (L) à la face inférieure de la matière organique présente sur le plancher de chargement susmentionné, le dispositif étant doté à une extrémité de celui-ci d'un espace (17) obtenu par une cloison (19) s'étendant sur toute la hauteur et la largeur du dispositif, l'espace ainsi obtenu étant séparé de l'espace de réacteur (5), dans lequel ledit espace est doté d'une ou plusieurs chambres de distribution d'air (21), ladite ou lesdites chambres de distribution d'air étant reliées à ladite ou auxdites lattes allongées parallèles entre elles pour fournir de l'air à celles-ci, dans lequel ladite ou lesdites chambres de distribution d'air sont reliées par l'intermédiaire d'une ou plusieurs chambres de pression (23) à ladite ou auxdites lattes allongées parallèles entre elles pour fournir de l'air à celles-ci par l'intermédiaire du canal d'air (34) intégré dans ladite latte, dans lequel chaque latte (9) est dotée de son propre canal d'air (34), dans lequel ladite ou lesdites chambres de pression sont mobiles selon un mouvement alternatif (B) dans la direction longitudinale des lattes.

2. Dispositif selon la revendication 1, **caractérisé en ce qu'**une ou plusieurs ouvertures (15) du canal d'air s'étendent sur presque toute la direction longitudinale des lattes.

3. Dispositif selon l'une ou plusieurs des revendications 1 et 2, **caractérisé en ce que** les dimensions de la ou des ouvertures (15) sont telles que les quantités d'air délivrées par l'intermédiaire du canal d'air (34) s'étendant sur presque toute la longueur de celui-ci et fournies par la ou les ouvertures (15) à la matière organique présente sur le plancher de chargement susmentionné, sont presque identiques pour chacune des ouvertures.

4. Dispositif selon une ou plusieurs des revendications 1 à 3, **caractérisé en ce que** la ou les chambres de distribution d'air susmentionnées sont reliées au moyen d'un ou de plusieurs tuyaux flexibles (25) à la ou aux chambres de pression susmentionnées.

5. Dispositif selon une ou plusieurs des revendications 1 à 4, **caractérisé en ce que** la ou les chambres de pression susmentionnées s'étendent sur presque la largeur du plancher de chargement et sont positionnées perpendiculairement à la direction de déplacement de la rangée de lattes allongées parallèles entre elles.

6. Dispositif selon une ou plusieurs des revendications 1 à 5, **caractérisé en ce que** la ou les chambres de pression susmentionnées sont chacune reliées à une rangée distincte de lattes allongées parallèles entre elles.

7. Dispositif selon une ou plusieurs des revendications 1 à 6, **caractérisé en ce que** l'espace de réacteur susmentionné est doté d'un moyen (27) destiné à fournir de l'eau ou d'autres fractions liquides à l'espace de réacteur, dans lequel ledit espace (17) est de préférence doté d'un moyen (29) destiné à extraire et/ou évacuer de la chaleur de l'espace de réacteur, en particulier dans lequel ledit dispositif est doté d'un système de mesure et de commande (31) pour surveiller les conditions dans l'espace de réacteur dans lequel le compostage de matière organique est effectué, en particulier dans lequel ledit espace de réacteur est doté d'un moyen (33) destiné à évacuer et traiter les gaz qui se forment lors du compostage de matière organique, depuis l'espace de réacteur.

8. Procédé (101) pour le compostage de matière organique dans un dispositif selon l'une ou plusieurs des revendications 1 à 7, dans lequel la matière organique à composter est aérée, **caractérisé en ce que** le procédé comprend les étapes suivantes :
amenée (103) de matière organique résiduelle ou déchets sur le plancher de chargement,
déplacement de la matière organique sur le plancher de chargement (105) en exécutant un mouvement alternatif des lattes,
fourniture d'air (107) à la face inférieure de la matière organique présente sur le plancher de chargement susmentionné afin de composter la matière organique,
interruption de la fourniture d'air (109), et
retrait (111) de la matière ainsi compostée du plancher de chargement en exécutant un mouvement alternatif des lattes.

9. Procédé pour le compostage de matière organique selon la revendication 8, **caractérisé en ce que** le déplacement de la matière organique sur le plancher de chargement (105) comprend l'exécution d'un mouvement alternatif d'une rangée de lattes reliées entre elles, ladite rangée de lattes étant reliée à une chambre de pression commune, dans lequel le mouvement alternatif susmentionné comprend le déplacement successif d'une rangée de lattes et de la chambre de pression reliée à celle-ci, suivi d'une rangée de lattes suivante et de chambre(s) de pression reliée(s) à celle-ci.

10. Procédé selon une ou plusieurs des revendications 8 et 9, **caractérisé en ce que** la matière organique résiduelle ou déchets à composter sont choisis dans le groupe de fumier animal tel que le fumier de bovins, le fumier de dindes, le fumier de poulets, le fumier de poulets de chair, le fumier de porcs, le fumier de moutons et de chèvres, le fumier de visons, le fumier de canards, le fumier de lapins, le fumier de cheval et le fumier d'autres animaux sous forme solide et liquide, les déchets organiques, les déchets organiques ménagers, en particulier les déchets organiques de fruits et de légumes, les déchets issus de la production et de la transformation des aliments, les flux de résidus végétaux, tels que par exemple les matières résiduelles issues de la culture de champignons, et les flux de boues issus des stations de traitement des eaux, les flux de résidus et de déchets industriels organiques, les déchets organiques issus de l'agriculture, de l'horticulture, de l'aquaculture, de la sylviculture et de la préparation et de la transformation des aliments, les déchets issus de la transformation du sucre, de l'industrie laitière, les déchets issus de la production de boissons alcoolisées et non alcoolisées, les flux de déchets organiques contaminés, les déchets issus de processus thermiques, et/ou une ou plusieurs combinaisons de ceux-ci.

11. Procédé selon une ou plusieurs des revendications 8 à 10, **caractérisé en ce que** le flux d'air à fournir pour le processus de compostage se situe dans une plage d'au moins 20 m/s, de préférence d'au moins 30 m/s, d'au plus 70 m/s, de préférence d'au plus 60 m/s, idéalement d'au plus 50 m/s, dans lequel en particulier l'air à fournir a une température dans la plage de 5 à 80 °C, en particulier de 10 à 70 °C, de préférence de 40 à 70 °C.
